(19) Europäisches Patentamt
European Patent Office
Office européen des brevets

(11) **EP 1 300 689 B1**

(12) **EUROPEAN PATENT SPECIFICATION**

(45) Date of publication and mention
of the grant of the patent:
**05.03.2008 Bulletin 2008/10**

(51) Int Cl.:
*G01S 5/08* *(2006.01)*     *G01S 5/00* *(2006.01)*
*G01S 1/60* *(2006.01)*

(21) Application number: **02022160.2**

(22) Date of filing: **02.10.2002**

(54) **A method and a system for determining the geographic coordinates within mobile communications networks and related terminal**

Verfahren und Sytem zur geographischen Ortung in Kommunikations- Netzwerken und Terminal dafür

Méthode et appareil de détermination des coordonnées géographiques dans des réseaux de communications et terminal employé associé

(84) Designated Contracting States:
**AT BE BG CH CY CZ DE DK EE ES FI FR GB GR IE IT LI LU MC NL PT SE SK TR**

(30) Priority: **04.10.2001 IT TO20010941**

(43) Date of publication of application:
**09.04.2003 Bulletin 2003/15**

(73) Proprietor: **Telecom Italia S.p.A.**
**20123 Milano (IT)**

(72) Inventor: **Grego, Giorgio**
**10148 Torino (IT)**

(74) Representative: **Giannesi, Pier Giovanni et al**
**Pirelli S.p.A.**
**Industrial Property Dept.**
**Viale Sarca, 222**
**20126 Milano (IT)**

(56) References cited:
**WO-A-99/34230**          **GB-A- 847 253**
**US-A- 3 349 399**          **US-A- 5 920 284**

## Description

## Technical Field

The present invention faces the problem of determining the geographical coordinates within mobile communications networks.

The determination of absolute and/or relative geographical coordinates of a mobile terminal within a communications network can be advantageous being applicable to a wide range of services, such as for instance the so-called location billing (i.e. billing as a function of position), emergency calls, indication of distances or paths between the current position of a mobile terminal and the places or points of destination, etc.

## Background Art

At present, for location systems, use is made of techniques based on the triangulation of several base stations (BTS) received by the mobile terminal and/or GPS systems.

These well-known solutions have drawbacks owing for instance to the inadequate accuracy of the location action (triangulation systems usually allows accuracy levels of no better than 100 meters) or to the fact that they cannot operate inside a building.

WO patent application No. 99/34230 discloses a signalling system in which one or more beams scan the entities involved (e.g., players on a sports field) while information related to the scanning or sweeping action of the beams is also transmitted. Each entity carries a portable receiver/transmitter device which selects from the sweep related information at an appropriate instant an retransmits information either immediately, delayed or on interrogation, for processing at a central site.

Moreover, the ever increasing attention to privacy issues makes desirable the availability of techniques whereby the location action as such can be bound to an indication of consent by the user of the mobile receiver. All that, consequently, with no possibility for the network operator to accomplish, in an independent way, the location action in the absence of said consent.

In this regard, a solution has been proposed whereby a first and a second radiation source are used, located at two points of a given space. These sources perform the angular scanning of the space by means of a first and a second radiation, respectively. The first and the second radiation have a respective characteristic (for instance the frequency or a coding) that varies as a function of the position reached during the scanning motion. The first and the second radiation exhibit therefore, by each point of the space, a respective pair of values of said characteristic that univocally identify the position of said point within said space. The position of the point within said space is therefore identified starting from said pair of values, available at first only at the mobile terminal, situated at that point. The terminal has therefore the possibility of controlling the location action in such a way that the same action can be carried out only upon its consent.

## Disclosure of the Invention

The aim of this invention is to provide a solution that may be regarded as an alternative or as an improvement with respect to such previous proposal.

According to the invention, said aim is attained by virtue of a method and a location system having the characteristics specifically recalled in the following claims. The invention also concerns, in an autonomous manner, the terminal adequately equipped to perform the required actions.

## Brief Description of Drawings

The invention will now be described by way of a nonlimiting example, making reference to the attached drawings, wherein:

- Figure **1** schematically describes the organisation of a system according to the invention;
- Figure **2** schematically depicts the theoretical criteria on which the invention is based;
- Figure **3** is a functional block diagram illustrating the architecture of a system according to the invention;
- Figure **4** depicts in the form of a flow chart the execution criteria of the geographical location operation in a mobile receiver operating according to the invention; and
- Figures **5** and **6** are two explanatory diagrams showing the way of execution of some of the steps appearing on the flow chart of Figure **4**.

## Best mode for Carrying Out the Invention

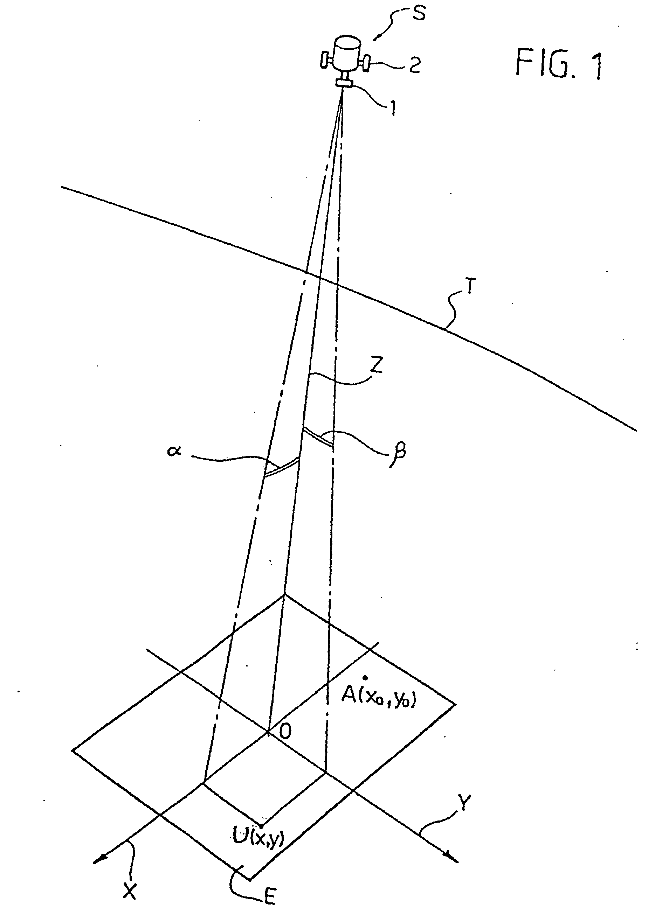

In the drawing of figure 1, S denotes a satellite observing a portion E of the Earth surface T.

The satellite, S, can be any communications satellite of a known type. The term "satellite" is used here in its broadest meaning, identifying any body (for instance - in addition to conventional satellites - a balloon, a shuttle, or a pilotless aircraft) that can be placed in an overlooking position with respect to the Earth surface so as to control the portion within which the location action occurs. In the embodiment of the invention being at present preferred, satellite S is a satellite orbiting around the Earth at a height of about 1000 kilometres. In this way the satellite S can observe the portion E of the Earth surface under a solid angle sufficiently wide as to ensure a high level of accuracy and resolution in carrying out the location operation.

As to the definition of the portion E of the Earth surface, it must still be noted that:

- the system according to the invention makes it possible to locate with respect to the Earth surface a generic terminal U, situated at ground level or in its proximity, and can therefore be used also for the location of a mobile terminal U situated, for example, onboard a flying aircraft, and

- in the sequel of this description the portion of surface E being considered will be ideally regarded as a plane surface; as a matter of fact, the surface E has a given degree of more or less marked and appreciable curvature as a function of its size; in any case, any possible effects of distortion (or of parallax) owing to the fact that the surface E is not a perfectly level surface, can be immediately compensated for by means of cartographic mapping techniques of known types, and currently used for surveys through a satellite.

Furthermore, even if this description makes reference to the possible use of a single satellite S, it is obvious that the solution according to the invention can be extended - according to criteria evident to those skilled in the art - to systems using more satellites S. All the above, together with the additional possibility of adding to the function of geographical location based on two coordinates (location in a plane), a location function based on three dimensions, implying the possibility of detecting also the altitude from the ground of the terminal U being subjected to location action.

In the sequel of this description it will be assumed that the portion E of the Earth surface within which the location function is performed may make reference to two axes x and y of an orthogonal Cartesian system having a point of origin O. Obviously the solution according to the invention can also be easily implemented through coordinate systems different from an orthogonal Cartesian coordinate system, such as for instance a polar coordinate system. The extension of the invention to such other coordinate systems can be readily carried out by those skilled in the art starting from the description relating to an orthogonal Cartesian coordinate system, a system that additionally corresponds to the form of embodiment of the invention providing a straightforward explanation at description level.

In the following the assumption will be made therefore that the position of any terminal U, situated at any point U(x, y) of the surface E may be considered as known once the coordinates x,y are known that identify the point U within the above-defined reference Cartesian system Oxy.

References 1 and 2 shown in Figure 1 identify two radiation sources (here represented for the sake of simplicity making reference to two different antennas, capable of being incorporated - according to well-known criteria - into an individual transmitting unit) that can transmit toward the Earth surface T, i.e. toward the portion of surface E within which the location action takes place, two signals formed by electromagnetic waves that perform a scanning of the space and therefore of the surface portion E, according to coordinates x and y of the Oxy reference system.

All the above takes place by appropriately varying at least one characteristic of the emitted radiation, as a function of the angle formed at a given instant by the main radiation direction with regard to a reference direction. For explanatory purposes, said reference direction may be seen as the direction identified by the line joining the point of the position of the satellite S at the instant when the location is performed, and any reference point (assuming again for simplicity sake the central point) of portion E of the Earth surface.

The above-mentioned space scanning (and therefore of the Earth surface portion E) can be accomplished through mechanical means, using for instance respective antennas having a high directivity, which are subjected to traverse, or - according to the solution being at present preferred - using antennas working according to techniques of the kind currently called "synthetic aperture" or "phased array" antennas. In this manner, during the cyclic scanning motion the radiation emitted by the antenna is at each instant concentrated into a major radiation lobe having for instance, at -3 dB, an aperture value of the order of 5°.

The radiations emitted by the transmitters 1 and 2 perform a space scanning according to two directions x and y, which are orthogonal to one another and identifying the family of planes comprising the plane of Earth surface portion E where the location action is performed. It will be appreciated that this holds generally true also if the satellite S is not situated in the zenith position with respect to the surface portion E.

The radiations emitted by the transmitters 1 and 2 are subjected to a modulation or coding in order that at least one characteristic of the radiation varies as a function of the position instantaneously reached by the above-cited scanning motion.

In a first example of embodiment, the above result can be achieved by subjecting the frequency emitted by the transmitters 1 and 2 to a modulation law such as

$$f_1 = f_{10} + \alpha \Delta f_1 \qquad (I)$$

for transmitter 1, which performs its scanning along axis x and of the kind

$$f_2 = f_{20} + \beta \Delta f_2 \qquad (II)$$

for transmitter 2, which performs its scanning along axis y.

It is therefore a frequency modulation with respect to a fixed reference value $f_{10}$, $f_{20}$ with the respective value of coordinates $\alpha$, $\beta$, that is identified and identifiable starting from the deviation of the frequency $f_1$, $f_2$ with respect to the reference value $f_{10}$, $f_{20}$.

Assuming that at a given instant the radiations emitted by the transmitters 1 and 2 illuminate a generic point U (x,y) within the surface portion E, values $\alpha$ and $\beta$ are representative of the corresponding values shown in Figure 1, i.e. of the angles formed by the major radiation lobes emitted by the transmitters 1 and 2, respectively, with respect to a reference direction of the straight line z connecting the point at which the satellite S is situated and the ground point 0 identifying the origin of the Cartesian system used to reference the portion of the Earth surface denoted by E. As will be better seen later, the actual position of point 0 is actually insignificant for the implementation of the invention.

To simplify the description, one may assume that the angle $\alpha$ as well as the angle $\beta$ are between value 0 and a value of some degree units. The amplitude of the scanning motion or traverse may however be greater or smaller, depending upon the size of the Earth portion E where the location is performed and/or upon the height of the orbit of the satellite S.

Once again it must be stressed that, even if the representation of Figure 1 does refer for simplicity sake to a satellite S placed in a practically zenith position with respect to the surface E, all the previous considerations apply in exactly the same way also to a situation in which the straight line z is generically tilted or slanting, and not orthogonal with respect to the surface E.

By adequately choosing the values of $f_{10}$ and $f_{20}$ (as well as the value of the maximum deviations $\Delta f_1$ and $\Delta f_2$) for instance so as to prevent the overlapping of frequency values emitted by the transmitters 1 and 2, one can set a bijection between the geographical coordinates of each point U(x,y) of the surface E and the two frequency values of the radiation received at that point starting from the transmitter 1 and transmitter 2, respectively.

Thus, the surface of the ground portion E is "mapped" into a matrix of frequency pairs that can be univocally associated to each individual point or position comprised in that surface. The degree of accuracy attainable when defining said bijection correspondence is a function of the frequency deviation $\Delta f$ utilised (in the sequel it will be assumed for simplicity that $\Delta f_1 = \Delta f_2 = \Delta f$) and of the size of the territory to which the same is associated.

Functionally equivalent solutions may be obtained by varying other characteristics of the emitted radiation as a function of the angle attained instantaneously by the scanning motion.

As an example, it is possible to use for the transmitters 1 and 2 an emission at a fixed carrier frequency, subjected to a modulation of digital type, for instance, through words including a predefined number of bits.

Using for instance 17 bits makes it therefore possible to obtain $2^{17}$ combinations of different codings, each capable of being associated to a respective angular value of the scanning motion (along axis x and along axis y, respectively) of the portion of Earth surface E being at that moment illuminated by the transmitters 1 and 2.

This variation is particularly suitable for the advantageous application in conjunction with the UWB (Ultra Wide Band) transmission technique, in place of the CDMA technique, commonly used in conventional location systems. As is well known, the UWB technique has the advantage of using extremely low power values and exhibiting a high immunity to echoes.

As already highlighted in the introduction to this description, the solution according to the invention is meant preferably for applications resorting to satellites S placed at an altitude of the order of 1000 kilometres with respect to the Earth surface. These satellites do not have geostationary characteristics and move instead at a considerable speed with respect to the Earth surface T.

This means that once a given portion E of the Earth surface is identified, the geometry shown in Figure 1 changes continuously just for the reason that the satellite continuously moves along its orbit.

Still making reference - for a more immediate understanding - to a solution in which the characteristic of radiations emitted by the transmitters 1 and 2 that varies as a function of the position reached during the scanning motion is represented by the frequency, the values describing the mapping of the ground surface E through a matrix of pairs of frequencies univocally associated to each individual point or position, continuously evolve with time.

The embodiment example of the invention illustrated here requires therefore that the scanning motion of the Earth surface by the transmitters 1 and 2 be swift enough so as to prevent from being affected by the satellite motion along its orbit. This result may be obtained by performing the above scanning motion following methodologies fully similar to those adopted for the scanning motion of tracking and navigation radars of modern battle-planes.

In an alternative embodiment of the invention (not depicted here, for a better understanding of the general principle) it is also possible to act on the mechanism of scanning and/or detection on the ground of radiations emitted by the sources 1 and 2 so as to take into account the fact that the satellite or satellites S carrying such sources are in motion, thus compensating for the effects of such a motion.

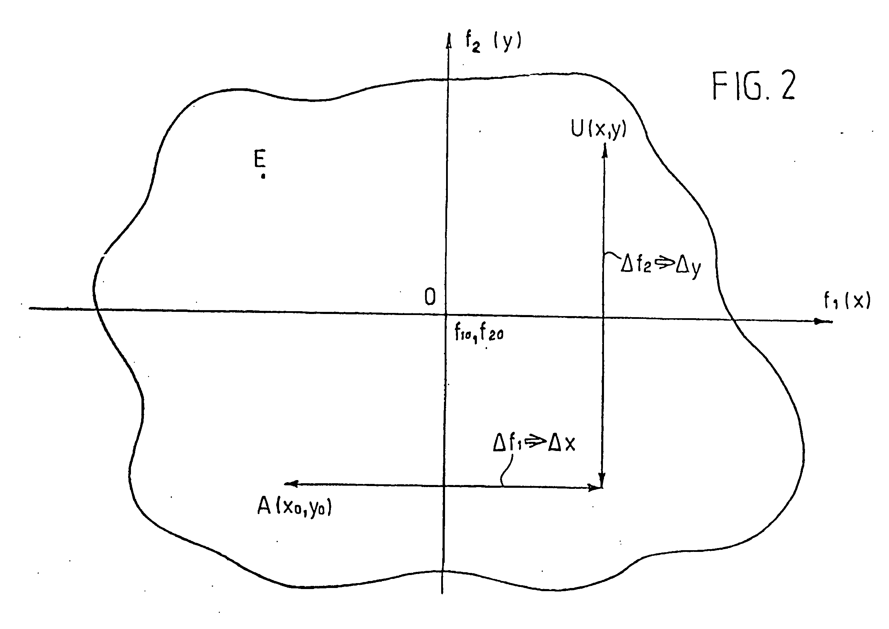

In particular the block diagram of Figure 2 refers to the situation which may be detected on a given portion of surface E, as a "photograph" taken at a given time instant.

Under these conditions one may therefore assume that the point of origin O of the reference system (O, x, y) on the ground is the one illuminated instantaneously by frequency values $f_{10}$ and $f_{20}$ (refer to previous relations (I) and (II)), emitted by the transmitter 1 and transmitter 2 onboard the satellite, respectively. This is actually a hypothesis made for simplifying the description, being - as will be seen later - insignificant for the implementation of the invention.

The point U, whose location coordinates correspond to the generic values x and y - it is to be recalled that the scanning motion must be swift enough to allow that the surface E can be swept by the transmitters 1 and 2 in a time interval so small that the satellite S is actually considered as stationary with respect to the ground - receives instead from the transmitters 1 and 2 of satellite S two signals of frequencies equal to $f_1(x)$ and $f_2(y)$ respectively, generally defined according to the relations (I) and (II) described before.

A generic other point A, included in the portion of ground E and having coordinates $x_0$ and $y_0$ will be illuminated by the transmitters 1 and 2 by means of radiations having frequency values equal to $f_1(x_0)$, $f_2(y_0)$, respectively, also these values being identified on the basis of relations (I) and (II).

The representation of the frequency plan which has been adapted in Figure 2, allows one to immediately realise that the differences $\Delta f_1 = f_1(x) - f_1(x_0)$ as well as the difference $\Delta f_2 = f_2(y) - f_2(y_0)$ univocally identify the coordinate difference between point U and point A, along the axis x ($\Delta x$) and along the axis y ($\Delta y$) of the reference system Oxy.

Once the coordinates ($x_0$, $y_0$) of the point A, designed as reference point, are known, it is then immediately possible to go back to the generic coordinates (x, y) of point U, by performing their localisation.

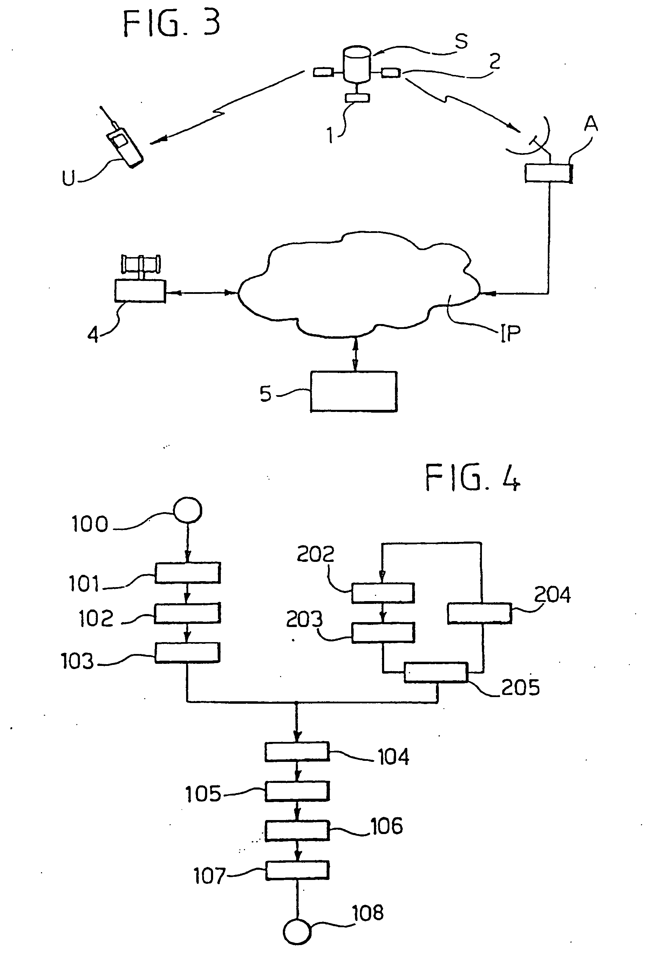

The described criteria enable therefore the implementation of a geographic location system on the basis of the diagram shown in Figure 3.

In such a figure, the reference S obviously indicates the satellite equipped with the transmitters 1 and 2 emitting respective radiations such that the scanning motion along the directions x and y is performed by accompanying said space scanning motion with a corresponding modulation criterion (frequency or in general - of any other characteristic of the radiation, for instance through coding of the signal itself) of the respective radiation.

In Figure 3, there is denoted by U a generic mobile terminal (for instance, a standard cellular phone) that will be assumed as situated at the point U(x,y) designated to be the object of location.

It is assumed that, at the moment being considered, the mobile terminal U is connected to a corresponding base station (BTS), denoted by 4, over the mobile communications network to which the terminal U is linked.

The reference A indicates instead a geographic reference station located at a point A having the coordinates - already known - $x_0$ and $y_0$. In this respect, reference must still be made to the diagram of Figure 2.

The base station 4 (thus, terminal U), as well as the reference station A are therefore capable of connecting over a generic telecommunications network IP. Said network may be formed by the mobile network to which the terminal U is linked as well as by a set of fixed/mobile networks that are interconnected to one another.

Eventually, notation 5 indicates a location unit connected over the network IP. The unit 5 is capable of performing the geographic location function of the terminal U as a function of the data provided by the terminal U and the reference station A.

In this respect it will be appreciated that the unit 5 is capable of carrying out the above-mentioned location function only if the unit 5 under question has available the data provided (according to the procedures to be better described in the sequel) by the terminal U. This means that the location action may be accomplished only if explicitly requested/authorised by the mobile terminal U.

Even if the architecture depicted in Figure 3 corresponds to the form of embodiment of the invention being preferred at the moment, it must be noted that the same elements/modules described therein could be actually situated in a different way, for example placing the unit 5 at the reference station A.

Furthermore, the unit 5 could be incorporated in every respect into the mobile terminal U or the satellite S.

These two alternative solutions, though feasible and definitely falling within the scope of the invention, are not preferred at the moment. The first one, because it requires that the terminal U has available the necessary processing power. The second solution for the reason that it produces as such an information interchange towards the satellite S, i.e. an additional traffic over channels conventionally regarded as high-value, such as the communication channels via satellite.

Furthermore, the location mechanism based on the differential frequency deviation described with reference to Figure 2 could be exploited under the provision that the reference station A re-transmits in a substantially continuous way toward the satellite S data identifying the pair of frequency values (or of coded values) being received instant by instant by the same station A starting from the satellite S. All the above is to be carried out in order to allow the satellite S itself to adequately "re-calibrate" the mechanism of modulation/coding of the radiations transmitted by transmitters 1 and 2, correcting or integrating the radiations emitted by the transmitters 1 and 2 through such data as to allow the terminal U to be located to immediately determine instant by instant its position by simply starting from the pair of frequencies or coded words received instant by instant from the satellite S.

With reference to the diagram of Figure 2 this way of operation corresponds in principle to the solution of recording instant by instant the point of origin O of the Cartesian reference x, y by the reference station A. Also this possible variation of embodiment of the invention is not considered at the moment as preferred, for it produces a considerable implementation burden both at communications level between satellite and reference stations and at the level of processing power onboard the satellite S. All the above, additionally, does not bring any contribution to any substantial simplification of the characteristics of the mobile terminal U.

For this reason, the flow chart in Figure 4 illustrating the possibility for the receiver U to start the location action (thus the identification of the position where the same terminal U is situated at that very moment) refers to the general architecture depicted in Figure 3.

The flow chart of Figure 4 shows a possible way of configuring the terminal U in order to exploit the variation of the characteristics of radiations emitted by the transmitters 1 and 2 to allow the determination of the geographical coordinates of the place where the mobile terminal U is situated within the ground portion E.

Starting from an initial step 100, in a step denoted by 101 the user of the terminal U introduces into the system the command (thus the consent) to start the location action. This may take place - in a known manner -by simply pressing a button on the terminal U.

In the steps 102 and 103 (represented here as performed sequentially to one another, but executable in parallel in order to achieve a higher processing speed of the information) the terminal U "reads" the signals received from the transmitter 1 and transmitter 2, respectively.

In this respect it will be appreciated that the mobile terminal U can be a standard cellular phone equipped with a communication interface that allows the reception of signals from a satellite, such as the satellite S. The relating technology is commonly available, being adopted for instance for the so called satellite cellular phones.

Making reference for simplicity sake to the situation wherein the radiations emitted by the transmitters 1 and 2 are subjected to frequency modulation as a function of the angle of the scanning motion (that can be cyclic in terms of "to-and-from"), the terminal U is generally able to distinguish the two emissions as a function of the two different frequency ranges being used.

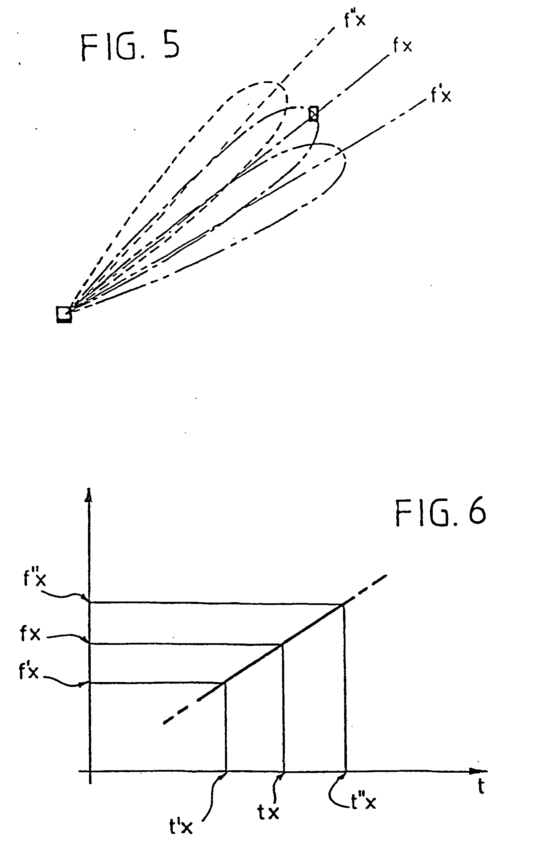

Each of the values $f_1$ and $f_2$ is preferably obtained as the mean (or central) value of a possible variation range according to criteria better illustrated in Figures 5 and 6 (with reference to transmitter 1).

However directional the relating antennas may be, the radiation diagrams of the transmitters 1 and 2 exhibit as a matter of fact a certain angular aperture. Therefore the mobile terminal U - assumed to be for simplicity sake in a fixed position - is in any case illuminated by each transmitter 1 or 2, not only at an instant ($t_x$ in Figure 6) but also during a certain time interval ($t'_x$; $t''_x$).

During such a time interval, owing to the scanning motion in progress, the frequency emitted by the transmitter (and received by the terminal U) varies for instance between $f'_x$ and a value $f''_x$. This typically occurs according to a ramp behaviour of the type illustrated in Figure 6.

The value $f_1$ (or $f_2$) actually used is therefore identified as a mean or central value of the above-mentioned ramp (for instance by choosing the frequency val-

ue $f_x = (f'_x + f''_x)/2$. That means choosing a frequency value $f_1$ or $f_2$ corresponding to the bisecting line (or central axis) of the envelope of all the lobes that have illuminated the mobile receiver.

The same considerations obviously apply to the case in which the characteristic exploited for the location action is formed by a different characteristic with respect to the radiation frequency illuminating the mobile receiver.

For instance, in the case in which such characteristic is a coding applied to the signal emitted by the transmitters 1 or 2, the corresponding value used to perform the location may be formed for instance by the mean or central value taken by the code during the time interval in which the mobile terminal U is illuminated by the transmitter 1 or 2.

The set of operations corresponds in practice to detecting the values $f_1$ and $f_2$ of the formulas (I) and (II) seen previously, and corresponding to the point at which at that moment the mobile terminal U is situated.

In parallel, it will be assumed that steps 202 and 203, substantially similar to steps 102 and 103 are carried out cyclically, with a periodic wait phase 204, at the reference station A. All the above occurs in such a way that the same reference station A makes constantly available, in a step 205, the updated values of the frequency pair (or of the pair of coded words) that identify its position, i.e. its geographical coordinates ($x_0$, $y_0$) on the surface E.

At this point, the operation of the system evolves towards a step 104 in which the location unit 5 as such comes into play.

The latter reads, upon their reception over the IP network from the terminal U and the station A, respectively, the frequency values f(x), f(y) instantaneously received by terminal U and the corresponding values $f(x_0)$ and $f(y_0)$ sent by the base station A.

In a step denoted by 105, unit 5 determines, starting from the differences $\Delta f_1 = f_1(x) - f_1(x_0)$ and $\Delta f_2 = f_2(y) - f_2(y_0)$, the position deviation respectively according to coordinate x, i.e. ($\Delta x$), and with respect to coordinate x, i.e. ($\Delta y$), existing between the point where terminal U is located and the base station A.

Given the differential character of the location mechanism just described, the operation of the unit 5 does not necessarily require a processing of algorithmic type. In fact, at the unit 5 a comparison table (look up table) can be established wherein for each pair of differential values or frequency deviation values $\Delta f_1$, $\Delta f_2$ the geographical coordinates are recorded (referred to the point $x_0$, $y_0$ where the reference station is situated) of the point where the mobile terminal U is located.

Once again it must be noted that the location action performed by the unit 5 can be carried out only following the transmission, starting from the terminal U, of the information relating to the pair of frequency values or of coded words received at that moment by the terminal U starting from the satellite S.

This may take place according to modalities commonly used within the mobile radiocomunications systems, for instance owing to the routing of said data from the terminal U toward the unit 5 through messages in the SMS format. The same mechanism may be naturally adopted for transmitting the location information toward the terminal U starting from the unit 5. As stated before, such operation has been assumed to be performed in step 106 of the flow chart shown in Figure 4.

It is also possible, in a step or a set of steps schematically denoted by 107, to carry out one or more operations (transactions) bound to the performed location action (which has been here assumed as carried out in the step denoted by 105).

As already stated in the introduction to the present description, said operations may concern for instance billing orders as a function of the position (location billing), emergency calls, indications of distance and/or paths between the position at a given moment of the mobile receiver and places of various destinations, etc.

Once said operation is completed, the operation of determination of the geographical coordinates of the system evolves toward a final step, denoted by 108.

In a possible alternative configuration (not expressly illustrated in the diagram of Figure 4) the location may be carried out directly by the terminal U, the same having available - for instance as received by the system starting from station A - the information concerning the frequencies/codes received by the same station A starting from the satellite.

The configuration of the terminal U for the operation mode schematically represented by the flow chart of Figure 4, may take place through both set-up within terminal U of specific hardware components and an appropriate program of programmable elements already available at the same terminal U. Such a set-up at a software level may be advantageously achieved for instance through programming codes (means of program codes) inserted at the level of the so called SIM card, or through codes remotely loaded into the mobile terminal starting from the mobile communications system to which the same is linked.

From what has been previously said, it becomes evident that the location mechanism herein described can be applied in an identical manner to terminals U that are situated in proximity of the ground, for instance located onboard an airplane. All that applies at least to the location of the plane of surface E.

By making resort to two satellites S it is possible to obtain according to an extension - evident for those skilled in the art - of the described mechanism also a location of the mobile terminal U in vertical direction, i.e. orthogonally with respect to the plane identified by the axes X and Y.

It will be appreciated that many transmission mechanisms among the mobile terminal U, the base station A and the unit 5 exploit, over the network indicated by IP, the standard communications criteria of the mobile telephone networks.

As far as the transmission from the satellite S towards the mobile terminal U is concerned, if use is made of the sweeping mechanism through scanning that requires the use of coded words, the transmission of such a word can be effected over a dedicated channel (in the event in which the terminal U operates according to the GPRS or UMTS standard). All that may also occur by envisaging multi-standard operation criteria.

Furthermore it will be appreciated that the location mechanism previously described in relation to the Cartesian reference system (Oxy) can be implemented also by providing that the radiation sources 1 and 2 onboard the satellite S perform a scanning of the portion of the Earth surface denoted by E on the basis of a reference system of different type, for instance a polar coordinate system: scanning mechanisms of this kind (providing the scanning of a surface for example according to a spiral path) are well-known in the technique, for instance in applications of characters recognition.

Eventually, it will be again reminded that the solution according to the invention, designed for determining the position of a mobile receiver within a given portion of the Earth surface may also be applied to the location of mobile receivers that are not precisely located on the Earth surface, being for instance placed onboard a flying aeroplane.

## Claims

1. Method for determining the position of a point to be located (U) within a given portion (E) of the Earth surface (E), the method comprising the steps of:

    - providing a satellite (S) with associated a first (1) and a second (2) radiation source performing with a first and a second radiation, respectively, the scanning of said portion (E) of the Earth surface according to two coordinates (x, y) of a space reference system relating to said portion (E); said first and second radiation exhibiting at least one respective characteristic ($f_1$, $f_2$) that varies as a function of the position ($\alpha$, $\beta$) reached during said scanning, so that each point (U(x, y)) comprised within said portion (E) of the Earth surface is illuminated by a respective pair of values ($f_1(x)$, $f_2(y)$) of said at least one characteristic univocally identifying the coordinates of said point (U(x, y)) within said portion (E) of the Earth surface,
    - receiving said first and second radiation at said point to be located (U(x,y)) within said portion (E) of the Earth surface,
    - detecting (102, 103) said respective pair of values ($f_1(x)$, $f_2(y)$) of said at least one characteristic corresponding to said point to be located, and
    - identifying (105, 106) the position of said point to be located (U(x,y)) within said portion (E) of the Earth surface starting from said received pair of values ($f_1(x)$, $f_2(y)$).

2. Method according to claim 1, **characterised in that** it includes the steps of:

   - receiving said first and second radiation at least at one reference point whose coordinates ($x_0$, $y_0$) are known within said space reference system, detecting (202, 203) a pair of reference values ($f_1(x_0)$, $f_2(y_0)$) of said at least one characteristic corresponding to said at least one reference point ($A(x_0, y_0)$), and
   - identifying (105, 106) the position of said point to be located ($U(x, y)$) within said portion (E) of the Earth surface through comparison ($\Delta f_1$, $\Delta f_2$) between said respective pair of values ($f_1(x)$, $f_2(y)$) of said at least one characteristic corresponding to said point ($U(x, y)$) and said pair of reference values ($f_1(x_0)$), $f_2(y_0)$) of said at least one characteristic corresponding to said at least one reference point ($A(x_0, y_0)$).

3. Method according to claim 1 or 2, **characterised in that** said respective pair of values ($f_1(x)$, $f_2(y)$) or said pair of reference values ($f_1(x_0)$, $f_2(y_0)$) are identified as mean or central value ($f_x$) of said at least one respective characteristic within a time interval ($t'_x$, $t''_x$) during which the respective point ($U(x,y)$); $A(x_0, y_0)$) is illuminated by said radiation.

4. Method according to any of the previous claims, **characterised in that** said at least one characteristic consists of the frequency ($f_1$, $f_2$) of said radiation.

5. Method according to any of the claims 1 to 3, **characterised in that** said at least one characteristic consists of a code carried by said radiation.

6. Method according to claim 2 or 3, **characterised in that** at least one between said first and second radiation is subjected to frequency modulation ($\alpha\Delta f_1$, $\beta\Delta f_2$) with respect to a fixed reference value ($f_{10}$, $f_{20}$) and by the fact that said respective pair of values ($f_1(x)$; $f_2(y)$) or said pair of reference values ($f_1(x_0)$, $f_2(y_0)$) are identified by the deviation of said frequency with respect to said fixed reference value.

7. Method according to claim 2, **characterised in that** it comprises the steps of:

   - placing at said point to be located ($U(x,y)$) a mobile terminal (U) sensitive to the radiation emitted by said first (1) and second (2) source of radiation and capable of connecting (4) to a telecommunications network (IP),
   - providing at said reference point ($A(x_0, y_0)$) a reference station (A), said reference station also being sensitive to the radiation of said first (1) and second (2) source of radiation, said reference station (A) also being capable of connecting to said telecommunications network (IP), and
   - providing a location unit (5) capable of connecting to said mobile terminal (U) and to said reference station (A) in order to receive said respective pair of values ($f_1(x)$, $f_2(y)$) of said at least one characteristic starting from said mobile terminal (U), as well as said pair of reference values ($f_1(x_0)$, $f_2(y_0)$) from said reference station (A) so as to determine the position of said mobile terminal (U) with respect to said reference station (A) through a comparison ($\Delta f_1$, $\Delta f_2$) between said respective pair of values ($f_1(x)$, $f_2(y)$) and said pair of reference values ($f_1(x_0)$, $f_2(y_0)$).

8. Method according to claim 7, **characterised in that** it includes the step of providing in said location unit (5) a database which collects as a function of value of the deviation ($\Delta f_1$, $\Delta f_2$) between said respective pair of values ($f_1(x)$, $f_2(y)$) of said characteristic and said pair of reference values ($f(x_0)$, $f(y_0)$), corresponding deviation values ($\Delta x$, $\Delta y$) of the position of said mobile terminal (U) with respect to said reference station (A).

9. System for determining the position of a terminal (U) within a given portion (E) of the Earth surface (T), the system comprising:

   - a satellite (S) with associated a first (1) and a second (2) radiation source performing with a first and a second radiation, respectively, the scanning of said portion (E) of the Earth surface according to two coordinates (x, y) of a space reference system relating to said portion (E) of the Earth surface; said first and second radiation exhibiting at least one respective characteristic ($f_1$, $f_2$) that varies as a function of the position ($\alpha$, $\beta$) that has been reached during that scanning, so that each point ($U(x, y)$) included within said portion (E) of the Earth surface is illuminated by a respective pair of values ($f_1(x)$, $f_2(y)$) of said at least one characteristic univocally identifying the coordinates of said point ($U(x, y)$) within said portion (E) of the Earth surface,
   - said terminal (U), capable of receiving said first and second radiation at said point of said portion (E) of the Earth surface and of detecting (102, 103) the respective pair of values ($f_1(x)$, $f_2(y)$) of said at least one characteristic, and
   - a location unit (U, 5) for identifying (105, 106) the position of said mobile terminal (U) within said portion (E) of the Earth surface starting from said respective pair of values ($f_1(x)$, $f_2(y)$).

**10.** System according to claim 9, <u>**characterised in that**</u> it comprises a reference station (A) for receiving said first and second radiation at least at one reference point whose coordinates $(x_0, y_0)$ are known within said space reference system and for detecting (202, 203) a pair of reference values $(f_1(x_0), f_2(y_0))$ of said at least one characteristic corresponding to said at least one reference point $(A(x_0, y_0))$, and **in that** said location unit (U, 5) is configured for identifying (105, 106) the position of said mobile terminal (U) within said portion (E) of the Earth surface through comparison between said respective pair of values $(f_1(x), f_2(y))$ of said at least one characteristic corresponding to said point $(U(x, y))$ where said mobile terminal (U) is situated and said pair of reference values $(f_1(x_0), f_2(y_0))$ of said at least one characteristic corresponding to said at least one reference point $(A(x_0, y_0))$ where said reference station is located.

**11.** System according to any of the previous claims 9 to 10, <u>**characterised in that**</u> said first (1) and second (2) radiation sources are so configured that said at least one characteristic is formed by the frequency $(f_1, f_2)$ of said radiation.

**12.** System according to any of the claims 9 to 11, <u>**characterised in that**</u> said first (1) and second (2) radiation sources are so configured that said at least one characteristic is formed by a code carried by said radiation.

**13.** System according to claim 10 or 11, <u>**characterised in that**</u> at least one between said first and second radiation is subjected to frequency modulation $(\alpha \Delta f_1, \beta \Delta f_2)$ with respect to a fixed reference value $(f_{10}, f_{20})$ and **in that** said respective pair of values $(f_1(x), f_2(y))$ or said pair of reference values $(f_1(x_0), f_2(y_0))$ are identified by the deviation of said frequency with respect to said fixed reference value.

**14.** System according to claim 10, <u>**characterised in that**</u>

- said location unit (5) is capable of connecting to said mobile terminal (U) and to said reference station (A) through said telecommunications network, for the purpose of receiving said respective pair of values $(f_1(x), f_2(y))$ of said at least one characteristic starting from said mobile terminal (U), as well as said pair of reference values $(f_1(x_0), f_2(y_0))$ from said reference station (A) so as to determine the position of said mobile terminal (U) with respect to said reference station (A) through said comparison $(\Delta f_1, \Delta f_2)$.

**15.** Mobile terminal (U), capable of being located within a given portion (E) of the Earth surface (T), <u>wherein</u> the terminal (U) is configured:

- for receiving from a satellite (S) a first (1) and a second (2) radiation, that perform the scanning of said portion (E) of the Earth surface according to two coordinates (x, y) of a space reference system relating to said portion (E) of the Earth surface; said first and second radiation exhibiting at least one respective characteristic $(f_1, f_2)$ varying as a function of the position $(\alpha, \beta)$ reached during said scanning, so that each point $(U(x, y))$ comprised within said portion (E) of the Earth surface is illuminated by said first and second radiation exhibiting, at each point, a respective pair of values $(f_1(x), f_2(y))$ of said at least one characteristic univocally identifying said coordinates of said point $(U(x, y))$ within said portion (E) of the Earth surface, and
- for detecting (102, 103) said respective pair of values $(f_1(x), f_2(y))$ of said at least one characteristic corresponding to the point of said portion (E) of the Earth surface where said terminal (U) is situated; the position of said point within said portion (E) of the Earth surface being identifiable (105, 106) starting from said respective pair of values $(f_1(x), f_2(y))$.

**16.** Terminal according to claim 15, <u>**characterised in that**</u> the terminal (U) is configured for selectively transmitting toward a location unit (5) said respective pair of values $(f_1(x), f_2(y))$ from said at least one point (U).

**17.** Terminal according to claim 15 or 16, <u>**characterised in that**</u> the terminal (U) is so configured as to cooperate with:

- a reference station (A), configured for receiving said first and second radiation at least at one reference point whose coordinates $(x_0, y_0)$ are known, within said space reference system and detecting (202, 203) a pair of reference values $(f_1(x_0), f_2(y_0))$ of said at least one characteristic corresponding to said at least one reference point $(A(x_0, y_0))$, and
- a location unit (5) configured for identifying (105, 106) the position of said mobile terminal (U) within said portion (E) of the Earth surface through comparison $(\Delta f_1, \Delta f_2)$ between said respective pair of values $(f_1(x), f_2(y))$ of said at least one characteristic corresponding to said at least one point $(U(x, y))$ where said mobile terminal (U) is situated, and said pair of reference values $(f_1(x_0), f_2(y_0))$ of said at least one characteristic corresponding to said at least one reference point $(A(x_0, y_0))$ where said reference station is located.

**18.** Terminal according to claim 15 or 16, <u>**characterised in that**</u> the terminal (U) is configured for receiving the location information from said location unit (5).

19. Terminal according to any of the previous claims 15 to 18, **characterised in that** said at least one characteristic is formed by the frequency ($f_1$, $f_2$) of said radiation.

20. Terminal according to any of the claims 15 to 18, **characterised in that** said at least one characteristic is formed by a code carried by said radiation.

21. Terminal according to any of the claims 17 to 20, **characterised in that** said respective pair of values ($f_1(x)$, $f_2(y)$) are identified by the deviation of said at least one characteristic with respect to said reference values.

22. Terminal according to any of the claims 15 to 21, **characterised in that** it comprises means for reading program code and **in that** the terminal (U) is configured, at least in part, on the basis of the program code read by said terminal (U) .


**Patentansprüche**

1. Verfahren zur Bestimmung der Position eines innerhalb eines gegebenen Teils (E) der Erdoberfläche (E) zu ortenden Punktes, mit den Schritten:

   - Bereitstellen eines Satelliten (S) mit einer ersten (1) und einer zweiten (2) Strahlungsquelle, die mit einer ersten bzw. einer zweiten Strahlung das Abtasten des Teils (E) der Erdoberfläche gemäß zwei Koordinaten (x, y) eines Raumbezugssystems bezüglich des Teils (E) durchführen, wobei die erste und die zweite Strahlung zumindest eine jeweilige Eigenschaft ($f_1$, $f_2$) zeigen, die sich als eine Funktion der Position ($\alpha$, $\beta$) verändert, die während der Abtastung erreicht wird, so dass jeder Punkt (U(x, y)), der innerhalb des Teils (E) der Erdoberfläche liegt, durch ein jeweiliges Wertepaar ($f_1(x)$, $f_2(y)$) der zumindest einen Eigenschaft beleuchtet wird, das die Koordinaten des Punkts (U(x, y)) innerhalb des Teils (E) der Erdoberfläche eindeutig identifiziert,
   - Empfangen der ersten und zweiten Strahlung an dem innerhalb des Teils (E) der Erdoberfläche zu ortenden Punkt (U(x, y)),
   - Erfassen (102, 103) des jeweiligen Wertepaars ($f_1(x)$, $f_2(y)$) der zumindest einen Eigenschaft entsprechend dem zu ortenden Punkt; und
   - Identifizieren (105, 106) der Position des zu ortenden Punkts (U(x, y)) innerhalb des Teils (E) der Erdoberfläche beginnend von dem empfangen Wertepaar ($f_1(x)$, $f_2(y)$).

2. Verfahren nach Anspruch 1, **dadurch gekennzeichnet, dass** es die Schritte enthält:

   - Empfangen der ersten und zweiten Strahlung zumindest an einem Bezugspunkt, dessen Koordinaten ($x_0$, $y_0$) innerhalb des Raumbezugssystems bekannt sind, Erfassen (202, 203) eines Paars von Bezugswerten ($f_1(x_0)$, $f_2(y_0)$) der zumindest einen Eigenschaft entsprechend dem zumindest einen Bezugspunkt (A($x_0$, $y_0$)); und
   - Identifizieren (105, 106) der Position des zu ortenden Punkts (U(x, y)) innerhalb des Teils (E) der Erdoberfläche durch Vergleich ($\Delta f_1$, $\Delta f_2$) zwischen dem jeweiligen Wertepaar ($f_1(x)$, $f_2(y)$) der zumindest einen Eigenschaft entsprechend dem Punkt (U(x, y)) und dem Paar von Bezugswerten ($f_1(x_0)$, $f_2(y_0)$) der zumindest einen Eigenschaft entsprechend dem zumindest einen Bezugspunkt (A($x_0$, $y_0$)).

3. Verfahren nach Anspruch 1 oder 2, **dadurch gekennzeichnet, dass** das jeweilige Wertepaar ($f_1(x)$, $f_2(y)$) oder das Paar von Bezugswerten ($f_1(x_0)$, $f_2(y_0)$) als Mittel- oder Zentrumswert ($f_x$) der zumindest einen jeweiligen Eigenschaft innerhalb eines Zeitintervalls ($t'_x$, $t''_x$), während dessen der jeweilige Punkt (U(x, y)); A($x_0$, $y_0$)) durch die Strahlung bestrahlt wird, identifiziert werden.

4. Verfahren nach einem der vorangehenden Ansprüche, **dadurch gekennzeichnet, dass** die zumindest eine Eigenschaft aus der Frequenz ($f_1$, $f_2$) der Strahlung besteht.

5. Verfahren nach einem der Ansprüche 1 bis 3, **dadurch gekennzeichnet, dass** die zumindest eine Eigenschaft aus einem durch die Strahlung getragenen Code besteht.

6. Verfahren nach Anspruch 2 oder 3, **dadurch gekennzeichnet, dass** zumindest eine unter der ersten und zweiten Strahlung einer Frequenzmodulation ($\alpha\Delta f_1$, $\beta\Delta f_2$) im Hinblick auf einen festen Bezugswert ($f_{10}$, $f_{20}$) unterzogen wird und durch die Tatsache, dass das jeweilige Wertepaar ($f_1(x)$, $f_2(y)$) oder das Paar von Bezugswerten ($f_1(x_0)$, $f_2(y_0)$) durch die Abweichung der Frequenz im Hinblick auf den festen Bezugswerte identifiziert sind.

7. Verfahren nach Anspruch 2, **dadurch gekennzeichnet, dass** es die Schritte enthält:

   - Anordnen des aufzufindenden Punkts (U(x, y)) eines Mobilgeräts (U), das gegenüber der durch die erste (1) und die zweite (2) Strahlungsquelle emittierten Strahlung empfindlich ist und mit einem Telekommunikationsnetz (IP) verbinden kann,

- Ausbilden einer Bezugsstation (A) an dem Bezugspunkt (A($x_0$, $y_0$)), wobei die Bezugsstation auch gegenüber der Strahlung der ersten (1) und zweiten (2) Strahlungsquelle empfindlich ist, wobei die Bezugsstation (A) auch mit dem Telekommunikationsnetz (IP) verbinden kann; und

- Ausbilden einer Ortsbestimmungseinheit (5), die mit dem Mobilgerät (U) und der Bezugsstation (A) verbinden kann, um das jeweilige Wertepaar ($f_1(x)$, $f_2(y)$) der zumindest einen Eigenschaft beginnend von dem Mobilgerät (U) zu empfangen, ebenso wie das Paar von Bezugswerten ($f_1(x_0)$, $f_2(y_0)$) von der Bezugsstation (A), um die Position des Mobilgeräts (U) im Hinblick auf die Bezugsstation (A) durch einen Vergleich ($\Delta f_1$, $\Delta f_2$) zwischen dem jeweiligen Wertepaar ($f_1(x)$, $f_2(y)$) und dem Paar von Bezugswerten ($f_1(x_0)$, $f_2(y_0)$) zu bestimmen.

**8.** Verfahren nach Anspruch 7, **dadurch gekennzeichnet, dass** es den Schritt eines Ausbildens einer Datenbank in der Ortsbestimmungseinheit (5), die als eine Funktion eines Werts der Abweichung ($\Delta f_1$, $\Delta f_2$) zwischen dem jeweiligen Wertepaar ($f_1(x)$, $f_2(y)$) der Eigenschaft und dem Paar von Bezugswerten ($f(x_0)$, $f(y_0)$), entsprechend Abweichungswerten ($\Delta x$, $\Delta y$) der Position des Mobilgeräts (U) im Hinblick auf die Bezugsstation (A) enthält.

**9.** System zur Bestimmung der Position eines Endgeräts (U) innerhalb eines gegebenen Teils (E) der Erdoberfläche (T), mit:

     - einem Satelliten (S), der zu einer ersten (1) und einer zweiten (2) Strahlungsquelle gehört, die mit einer ersten bzw. einer zweiten Strahlung die Abtastung des Teils (E) der Erdoberfläche gemäß zwei Koordinaten (x, y) eines Raumbezugssystems bezüglich dem Teil (E) der Erdoberfläche durchführt, wobei die erste und zweite Strahlung zumindest eine jeweilige Eigenschaft ($f_1$, $f_2$) zeigen, die sich als eine Funktion der Position ($\alpha$, $\beta$) ändert, die während der Abtastung erreicht wurde, so dass jeder Punkt (U(x, y)), der innerhalb des Teils (E) der Erdoberfläche enthalten ist, durch ein jeweiliges Wertepaar ($f_1(x)$, $f_2(y)$) der zumindest einen Eigenschaft bestrahlt wird, das eindeutig die Koordinaten des Punkts (U(x, y)) innerhalb des Teils (E) der Erdoberfläche identifiziert;
     - dem Endgerät (U), das die erste und zweite Strahlung an dem Punkt des Teils (E) der Erdoberfläche empfangen kann und die jeweiligen Wertepaare ($f_1(x)$, $f_2(y)$) der zumindest einen Eigenschaft erfassen kann; und
     - einer Ortsbestimmungseinheit (U, 5) zur Identifikation (105, 106) der Position des mobilen Endgeräts (U) innerhalb des Teils (E) der Erdoberfläche beginnend von dem jeweiligen Wertepaar ($f_1(x)$, $f_2(y)$).

**10.** System nach Anspruch 9, **dadurch gekennzeichnet, dass** es eine Bezugsstation (A) zum Empfang der ersten und zweiten Strahlung zumindest an einem Bezugspunkt enthält, dessen Koordinaten ($x_0$, $y_0$) innerhalb des Raumbezugssystems bekannt sind, und zur Erfassung (202, 203) eines Paars von Bezugswerten ($f_1(x_0)$, $f_2(y_0)$) der zumindest einen Eigenschaft entsprechend dem zumindest einen Bezugspunkt (A($x_0$, $y_0$)) und dadurch, dass die Ortsbestimmungseinheit (U, 5) ausgebildet ist zur Identifikation (105, 106) der Position des mobilen Endgeräts (U) innerhalb des Teils (E) der Erdoberfläche durch Vergleich zwischen dem jeweiligen Wertepaar ($f_1(x)$, $f_2(y)$) der zumindest einen Eigenschaft entsprechend dem Punkt (U(x, y)), wo sich das mobile Endgerät (U) befindet und dem Paar von Bezugswerten ($f_1(x_0)$, $f_2(y_0)$) der zumindest einen Eigenschaft entsprechend dem zumindest einen Bezugspunkt (A($x_0$, $y_0$)), wo sich die Bezugsstation befindet.

**11.** System nach einem der vorangehenden Ansprüche 9 bis 10, **dadurch gekennzeichnet, dass** die ersten (1) und zweiten (2) Strahlungsquellen derart konfiguriert sind, dass die zumindest eine Eigenschaft durch die Frequenz ($f_1$, $f_2$) der Strahlung gebildet ist.

**12.** System nach einem der Ansprüche 9 bis 11, **dadurch gekennzeichnet, dass** die ersten (1) und zweiten (2) Strahlungsquellen so konfiguriert sind, dass die zumindest eine Eigenschaft durch einen durch die Strahlung getragenen Code gebildet ist.

**13.** System nach Anspruch 10 oder 11, **dadurch gekennzeichnet, dass** zumindest eine unter der ersten und zweiten Strahlung einer Frequenzmodulation ($\alpha\Delta f_1$, $\beta\Delta f_2$) im Hinblick auf den festen Bezugswert ($f_{10}$, $f_{20}$) unterworfen wird und dass das jeweilige Wertepaar ($f_1(x)$, $f_2(y)$) oder das Paar von Bezugswerten ($f_1(x_0)$, $f_2(y_0)$) durch die Abweichung der Frequenz im Hinblick auf den festen Bezugswert identifiziert werden.

**14.** System nach Anspruch 10, **dadurch gekennzeichnet, dass**

     - die Ortbestimmungseinheit (5) mit dem mobilen Endgerät (U) und der Bezugsstation (A) durch das Telekommunikationsnetz zum Zweck eines Empfang des jeweiligen Wertepaars ($f_1(x)$, $f_2(y)$) der zumindest einen Eigenschaft beginnend von dem mobilen Endgerät (U) ebenso wie dem Paar von Bezugswerten ($f_1(x_0)$, $f_2(y_0)$) der Bezugsstation (A) verbinden kann, um die Position des mobilen Endgeräts (U) im Hinblick auf die Bezugsstation (A) durch den Vergleich ($\Delta f_1$, $\Delta f_2$) zu bestimmen.

**15.** Mobiles Endgerät (U), das innerhalb eines gegebenen Teils (E) der Erdoberfläche (T) geortet werden kann, wobei das Endgerät (U) ausgebildet ist:

- zum Empfang einer ersten (1) und einer zweiten (2) Strahlung von einem Satelliten (S), die die Abtastung des Teils (E) der Erdoberfläche gemäß zwei Koordinaten (x, y) eines Raumbezugssystems bezüglich des Teils (E) der Erdoberfläche durchführen, wobei die erste und die zweite Strahlung zumindest eine jeweilige Eigenschaft ($f_1$, $f_2$) zeigen, die sich als eine Funktion der Position ($\alpha$, $\beta$) verändert, die während der Abtastung erreicht wird, so dass jeder Punkt (U(x, y)), der innerhalb des Teils (E) der Erdoberfläche liegt, durch die erste und die zweite Strahlung beleuchtet wird, die an jedem Punkt ein jeweiliges Wertepaar ($f_1(x)$, $f_2(y)$) der zumindest einen Eigenschaft zeigen, das eindeutig die Koordinaten des Punkts (U(x, y)) innerhalb des Teils (E) der Erdoberfläche identifiziert, und
- zur Bestimmung (102, 103) des jeweiligen Wertepaars ($f_1(x)$, $f_2(y)$) der zumindest einen Eigenschaft entsprechend dem Punkt des Teils (E) der Erdoberfläche, wo sich das Endgerät U) befindet, wobei die Position des Punkts innerhalb des Teils (E) der Erdoberfläche beginnend von dem jeweiligen Wertepaar ($f_1(x)$, $f_2(y)$) identifizierbar ist (105, 106).

**16.** Endgerät nach Anspruch 15, **dadurch gekennzeichnet, dass** das Endgerät (U) zum ausgewählten Senden des jeweiligen Wertepaars (f1(x), f2(y)) von dem zumindest einen Punkt (U) zu einer Ortsbestimmungseinheit (5) ausgebildet ist.

**17.** Endgerät nach Anspruch 15 oder 16, **dadurch gekennzeichnet, dass** das Endgerät (U) ausgebildet ist, zusammenzuarbeiten mit:

- einer Bezugsstation (A), die zum Empfang der ersten und zweiten Strahlung an zumindest einem Bezugspunkt, dessen Koordinaten ($x_0$, $y_0$) bekannt sind, innerhalb des Raumbezugssystems und zur Erfassung (202, 203) eines Paars von Bezugswerten ($f_1(x_0)$, $f_2(y_0)$) der zumindest einen Eigenschaft entsprechend dem zumindest einen Bezugspunkt (A($x_0$, $y_0$)) ausgebildet ist, und
- einer Ortsbestimmungseinheit (5), die zur Identifizierung (105, 106) der Position des mobilen Endgeräts (U) innerhalb des Teils (E) der Erdoberfläche durch Vergleich ($\Delta f_1$, $\Delta f_2$) zwischen dem jeweiligen Wertepaars ($f_1(x)$, $f_2(y)$) der zumindest einen Eigenschaft entsprechend dem zumindest einen Punkt (U(x, y)), wo sich das mobile Endgerät (U) befindet, und dem Paar von Bezugswerten ($f_1(x_0)$, $f_2(y_0)$) der zumindest einen Eigenschaft entsprechend dem zumindest einen Bezugspunkt (A($x_0$, $y_0$)), wo sich die Bezugsstation befindet, ausgebildet ist.

**18.** Endgerät nach Anspruch 15 oder 16, **dadurch gekennzeichnet, dass** das Endgerät (U) zum Empfang der Ortsbestimmungsinformationen von der Ortsbestimmungseinheit (5) ausgebildet ist.

**19.** Endgerät nach einem der vorhergehenden Ansprüche 15 bis 18, **dadurch gekennzeichnet, dass** die zumindest eine Eigenschaft durch die Frequenz ($f_1$, $f_2$) der Strahlung gebildet ist.

**20.** Endgerät nach einem der Ansprüche 15 bis 18, **dadurch gekennzeichnet, dass** die zumindest einen Eigenschaft durch einen durch die Strahlung getragenen Code gebildet ist.

**21.** Endgerät nach einem der Ansprüche 17 bis 20, **dadurch gekennzeichnet, dass** das jeweilige Wertepaar ($f_1(y)$, $f_2(y)$) durch die Abweichung von der zumindest einen Eigenschaft im Hinblick auf die Bezugswerte identifiziert wird.

**22.** Endgerät nach einem der Ansprüche 15 bis 21, **dadurch gekennzeichnet, dass** es eine Einrichtung zum Lesen von Programmcode enthält und dass das Endgerät (U) zumindest teilweise auf der Grundlage des durch das Endgerät (U) gelesenen Programmcodes ausgebildet ist.

**Revendications**

**1.** Procédé pour déterminer la position d'un point à localiser (U) à l'intérieur d'une portion donnée (E) de la surface terrestre (E), le procédé comprenant les étapes consistant à :

- fournir un satellite (S) avec une première (1) et une seconde (2) source de rayonnement associées effectuant avec un premier et un second rayonnement, respectivement, le balayage de ladite portion (E) de la surface terrestre selon deux coordonnées (x, y) d'un système de référence spatial concernant ladite portion (E) ; lesdits premier et second rayonnements présentant au moins une caractéristique respective ($f_1$, $f_2$) qui varie en fonction de la position ($\alpha$, $\beta$) atteinte durant ledit balayage, de sorte que chaque point ($U(x, y)$) compris à l'intérieur de ladite portion (E) de la surface terrestre soit illuminé par une paire de valeurs respective ($f_1(x)$, $f_2(y)$) de ladite au moins une caractéristique identifiant de manière univoque les coordonnées dudit point ($U(x, y)$) à l'intérieur de ladite portion (E) de la surface terrestre,

- recevoir lesdits premier et second rayonnements au niveau dudit point à localiser ($U(x, y)$) à l'intérieur de ladite portion (E) de la surface terrestre,

- détecter (102, 103) ladite paire de valeurs respective ($f_1(x)$, $f_2(y)$) de ladite au moins une caractéristique correspondant audit point à localiser, et

- identifier (105, 106) la position dudit point à localiser ($U(x, y)$) à l'intérieur de ladite portion (E) de la surface terrestre à partir de ladite paire de valeurs reçue ($f_1(x)$, $f_2(y)$).

2. Procédé selon la revendication 1, **caractérisé en ce qu'**il comprend les étapes consistant à :

    - recevoir lesdits premier et second rayonnements au moins au niveau d'un point de référence dont les coordonnées ($x_0$, $y_0$) sont connues à l'intérieur dudit système de référence spatial, détecter (202, 203) une paire de valeurs de référence ($f_1(x_0)$, $f_2(y_0)$) de ladite au moins une caractéristique correspondant audit au moins un point de référence ($A(x_0, y_0)$), et

    - identifier (105, 106) la position dudit point à localiser ($U(x, y)$) à l'intérieur de ladite portion (E) de la surface terrestre au moyen d'une comparaison ($\Delta f_1$, $\Delta f_2$) entre ladite paire de valeurs respective ($f_1(x)$, $f_2(y)$) de ladite au moins une caractéristique correspondant audit point ($U(x, y)$) et ladite paire de valeurs de référence ($f_1(x_0)$, $f_2(y_0)$) de ladite au moins une caractéristique correspondant audit au moins un point de référence ($A(x_0, y_0)$).

3. Procédé selon la revendication 1 ou 2, **caractérisé en ce que** ladite paire de valeurs respective ($f_1(x)$, $f_2(y)$) ou ladite paire de valeurs de référence ($f_1(x_0)$, $f_2(y_0)$) sont identifiées comme valeur moyenne ou centrale ($f_x$) de ladite au moins une caractéristique respective à l'intérieur d'un intervalle de temps ($t'_x$, $t''_x$) durant lequel le point respectif ($U(x, y)$); ($A(x_0, y_0)$) est illuminé par ledit rayonnement.

4. Procédé selon l'une quelconque des revendications précédentes, **caractérisé en ce que** ladite au moins une caractéristique consiste en la fréquence ($f_1$, $f_2$) dudit rayonnement.

5. Procédé selon l'une quelconque des revendications 1 à 3, **caractérisé en ce que** ladite au moins une caractéristique consiste en un code acheminé par ledit rayonnement.

6. Procédé selon la revendication 2 ou 3, **caractérisé en ce qu'**au moins un entre lesdits premier et second rayonnements est soumis à une modulation de fréquence ($\alpha\Delta f_1$, $\beta\Delta f_2$) relativement à une valeur de référence fixe ($f_{10}$, $f_{20}$) et par le fait que ladite paire de valeurs respective ($f_1(x)$, $f_2(y)$) ou ladite paire de valeurs de référence ($f_1(x_0)$, $f_2(y_0)$) sont identifiées par la déviation de ladite fréquence par rapport à ladite valeur de référence fixe.

7. Procédé selon la revendication 2, **caractérisé en ce qu'**il comprend les étapes consistant à :

    - placer au niveau dudit point à localiser ($U(x, y)$) un terminal mobile (U) sensible au rayonnement émis par lesdites première (1) et seconde (2) sources de rayonnement et capable de se connecter (4) à un réseau de télécommunications (IP),

    - fournir au niveau dudit point de référence ($A(x_0, y_0)$) une station de référence (A), ladite station de référence étant également sensible au rayonnement desdites première (1) et seconde (2) sources de rayonnement, ladite station de référence (A) étant également capable de se connecter audit réseau de télécommunications (IP), et

    - fournir une unité de localisation (5) capable de se connecter audit terminal mobile (U) et à ladite station de référence (A) afin de recevoir ladite paire de valeurs respective ($f_1(x)$, $f_2(y)$) de ladite au moins une caractéristique à partir dudit terminal mobile (U), ainsi que ladite paire de valeurs de référence ($f_1(x_0)$, $f_2(y_0)$) à partir de ladite station de référence (A) afin de déterminer la position dudit terminal mobile (U) par rapport à ladite station de référence (A) au moyen d'une comparaison ($\Delta f_1$, $\Delta f_2$) entre ladite paire de valeurs respective ($f_1(x)$, $f_2(y)$) et ladite paire de valeurs de référence ($f_1(x_0)$, $f_2(y_0)$).

8. Procédé selon la revendication 7, **caractérisé en ce qu'**il comprend l'étape consistant à fournir dans ladite unité de localisation (5) une base de données qui collecte en fonction d'une valeur de la déviation ($\Delta f_1$, $\Delta f_2$) entre ladite paire de valeurs respective ($f_1(x)$, $f_2(y)$) de ladite caractéristique et ladite paire de valeurs de référence ($f(x_0)$, $f(y_0)$), des valeurs de déviation correspondantes ($\Delta x$, $\Delta y$) de la position dudit terminal mobile (U) par rapport à ladite station de référence (A).

9. Système pour déterminer la position d'un terminal (U) à l'intérieur d'une portion donnée (E) de la surface terrestre (T), le système comprenant :

- un satellite (S) avec une première (1) et une seconde (S) source de rayonnement associées effectuant avec un premier et un second rayonnement, respectivement, le balayage de ladite portion (E) de la surface terrestre selon deux coordonnées (x, y) d'un système de référence spatial concernant ladite portion (E) de la surface terrestre ; lesdits premier et second rayonnements présentant au moins une caractéristique respective ($f_1$, $f_2$) qui varie en fonction de la position ($\alpha$, P) qui a été atteinte durant ce balayage, de sorte que chaque point (U(x, y)) compris à l'intérieur de ladite portion (E) de la surface terrestre soit illuminé par une paire de valeurs respective ($f_1(x)$, $f_2(y)$) de ladite au moins une caractéristique identifiant de manière univoque les coordonnées dudit point (U(x, y)) à l'intérieur de ladite portion (E) de la surface terrestre,
- ledit terminal (U), capable de recevoir lesdits premier et second rayonnements au niveau dudit point de ladite portion (E) de la surface terrestre et de détecter (102, 103) la paire de valeurs respective ($f_1(x)$, $f_2(y)$) de ladite au moins une caractéristique, et
- une unité de localisation (U, 5) pour identifier (105, 106) la position dudit terminal mobile (U) à l'intérieur de ladite portion (E) de la surface terrestre à partir de ladite paire de valeurs respective ($f_1(x)$, $f_2(y)$).

10. Système selon la revendication 9, **caractérisé en ce qu'**il comprend une station de référence (A) pour recevoir lesdits premier et second rayonnements au moins au niveau d'un point de référence dont les coordonnées ($x_0$, $y_0$) sont connues à l'intérieur dudit système de référence spatial et pour détecter (202, 203) une paire de valeurs de référence ($f_1(x_0)$, $f_2(y_0)$) de ladite au moins une caractéristique correspondant audit au moins un point de référence (A($x_0$, $y_0$)), et **en ce que** ladite unité de localisation (U, 5) est configurée pour identifier (105, 106) la position dudit terminal mobile (U) à l'intérieur de ladite portion (E) de la surface terrestre au moyen d'une comparaison entre ladite paire de valeurs respective ($f_1(x)$, $f_2(y)$) de ladite au moins une caractéristique correspondant audit point (U(x, y)) où ledit terminal mobile (U) est situé et ladite paire de valeurs de référence ($f_1(x_0)$, $f_2(y_0)$) de ladite au moins une caractéristique correspondant audit au moins un point de référence (A($x_0$, $y_0$)) où ladite station de référence est localisée.

11. Système selon l'une quelconque des revendications 9 à 10 précédentes, **caractérisé en ce que** lesdites première (1) et seconde (2) sources de rayonnement sont configurées de telle sorte que ladite au moins une caractéristique soit formée par la fréquence ($f_1$, $f_2$) dudit rayonnement.

12. Système selon l'une quelconque des revendications 9 à 11, **caractérisé en ce que** lesdites première (1) et seconde (2) sources de rayonnement sont configurées de telle sorte que ladite au moins une caractéristique soit formée par un code acheminé par ledit rayonnement.

13. Système selon la revendication 10 ou 11, **caractérisé en ce qu'**au moins un entre lesdits premier et second rayonnements est soumis à une modulation de fréquence ($\alpha\Delta f_1$, $\beta\Delta f_2$) relativement à une valeur de référence fixe ($f_{10}$, $f_{20}$) et **en ce que** ladite paire de valeurs respective ($f_1(x)$, $f_2(y)$) ou ladite paire de valeurs de référence ($f_1(x_0)$, $f_2(y_0)$) sont identifiées par la déviation de ladite fréquence par rapport à ladite valeur de référence fixe.

14. Système selon la revendication 10, **caractérisé en ce que**

- ladite unité de localisation (5) est capable de se connecter audit terminal mobile (U) et à ladite station de référence (A) par l'intermédiaire dudit réseau de télécommunications, dans le but de recevoir ladite paire de valeurs respective ($f_1(x)$, $f_2(y)$) de ladite au moins une caractéristique à partir dudit terminal mobile (U), ainsi que ladite paire de valeurs de référence ($f_1(x_0)$, $f_2(y_0)$) à partir de ladite station de référence (A) afin de déterminer la position dudit terminal mobile (U) par rapport à ladite station de référence (A) au moyen de ladite comparaison ($\Delta f_1$, $\Delta f_2$).

15. Terminal mobile (U), capable d'être localisé à l'intérieur d'une portion donnée (E) de la surface terrestre (T), dans lequel le terminal (U) est configuré :

- pour recevoir d'un satellite (S) un premier (1) et un second (2) rayonnement, qui effectuent le balayage de ladite portion (E) de la surface terrestre selon deux coordonnées (x, y) d'un système de référence spatial concernant ladite portion (E) de la surface terrestre ; lesdits premier et second rayonnements présentant au moins une caractéristique respective ($f_1$, $f_2$) variant en fonction de la position ($\alpha$, $\beta$) atteinte durant ledit balayage, de sorte que chaque point (U(x, y)) compris à l'intérieur de ladite portion (E) de la surface terrestre soit illuminé par lesdits premier et second rayonnements présentant, au niveau de chaque point, une paire de valeurs respective ($f_1(x)$, $f_2(y)$) de ladite au moins une caractéristique identifiant de manière univoque lesdites coordonnées dudit point (U(x, y)) à l'intérieur de ladite portion (E) de la surface terrestre, et
- pour détecter (102, 103) ladite paire de valeurs respective ($f_1(x)$, $f_2(y)$) de ladite au moins une caractéristique correspondant au point de ladite portion (E) de la surface terrestre où ledit terminal (U) est situé ; la position dudit point à l'intérieur de ladite portion (E) de la surface terrestre étant identifiable (105, 106) à partir de ladite paire de valeurs respective ($f_1(x)$, $f_2(y)$).

16. Terminal selon la revendication 15, **caractérisé en ce que** le terminal (U) est configuré pour transmettre sélectivement vers une unité de localisation (5) ladite paire de valeurs respective ($f_1(x)$, $f_2(y)$) depuis ledit au moins un point (U).

17. Terminal selon la revendication 15 ou 16, **caractérisé en ce que** le terminal (U) est configuré de manière à co-opérer avec :

    - une station de référence (A), configurée pour recevoir lesdits premier et second rayonnements au moins au niveau d'un point de référence dont les coordonnées ($x_0$, $y_0$) sont connues, à l'intérieur dudit système de référence spatial et détecter (202, 203) une paire de valeurs de référence ($f_1(x_0)$, $f_2(y_0)$) de ladite au moins une caractéristique correspondant audit au moins un point de référence ($A(x_0, y_0)$), et
    - une unité de localisation (5) configurée pour identifier (105, 106) la position dudit terminal mobile (U) à l'intérieur de ladite portion (E) de la surface terrestre au moyen d'une comparaison ($\Delta f_1$, $\Delta f_2$) entre ladite paire de valeurs respective ($f_1(x)$, $f_2(y)$) de ladite au moins une caractéristique correspondant audit au moins un point ($U(x, y)$) où ledit terminal mobile (U) est situé, et ladite paire de valeurs de référence ($f_1(x_0)$, $f_2(y_0)$) de ladite au moins une caractéristique correspondant audit au moins un point de référence ($A(x_0, y_0)$) où ladite station de référence est localisée.

18. Terminal selon la revendication 15 ou 16, **caractérisé en ce que** le terminal (U) est configuré pour recevoir l'information de localisation de ladite unité de localisation (5).

19. Terminal selon l'une quelconque des revendications 15 à 18 précédentes, **caractérisé en ce que** ladite au moins une caractéristique est formée par la fréquence ($f_1$, $f_2$) dudit rayonnement.

20. Terminal selon l'une quelconque des revendications 15 à 18, **caractérisé en ce que** ladite au moins une caractéristique est formée par un code acheminé par ledit rayonnement.

21. Terminal selon l'une quelconque des revendications 17 à 20, **caractérisé en ce que** ladite paire de valeurs respective ($f_1(x)$, $f_2(y)$) est identifiée par la déviation de ladite au moins une caractéristique par rapport auxdites valeurs de référence.

22. Terminal selon l'une quelconque des revendications 15 à 21, **caractérisé en ce qu'**il comprend des moyens pour lire un code de programme et **en ce que** le terminal (U) est configuré, au moins en partie, sur la base du code de programme lu par ledit terminal (U).

FIG. 1

FIG. 2

FIG. 3

FIG. 4

FIG. 5

f"x

fx

f'x

FIG. 6

f"x

fx

f'x

t'x

tx

t"x

t

**EP 1 300 689 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9934230 A